# EUROPEAN PATENT SPECIFICATION

(11) **EP 2 212 145 B1**
(45) Date of publication and mention of the grant of the patent: **18.04.2012**
(21) Application number: 07835109.5
(22) Date of filing: 16.10.2007
(51) Int. Cl.: B60K 15/073, B60K 15/03, B60K 15/063

(54) **A MODULAR FUEL TANK AND A METHOD OF MANUFACTURING A MODULAR FUEL TANK**
MODULARER KRAFTSTOFFTANK UND VERFAHREN ZUR HERSTELLUNG EINES MODULAREN KRAFTSTOFFTANKS
RÉSERVOIR À CARBURANT MODULAIRE ET PROCÉDÉ DE FABRICATION D'UN RÉSERVOIR À CARBURANT MODULAIRE

(43) Date of publication of application: 04.08.2010
(73) Proprietor: Volvo Lastvagnar AB, 405 08 Göteborg (SE)
(72) Inventor: SONDEREGGER, Sigurd, S-436 40 Askim (SE)
(74) Representative: Fröhling, Werner Otto
(86) International application number: PCT/SE2007/000907
(87) International publication number: WO 2009/051526

(56) References cited:
- EP-A1- 0 633 422
- EP-A1- 1 061 306
- EP-A1- 1 061 306
- WO-A1-00/05090
- WO-A1-00/05090
- WO-A1-2007/069987
- DE-A1- 4 442 780
- DE-A1- 4 442 780
- DE-A1- 10 323 072
- DE-U1- 20 306 793

## Description

### Field of the invention

The present invention relates to a heavy vehicle modular fuel tank, comprising a plurality of bowl shaped modules having an open end and a bowl end, which modules are connected to one another in a row in a longitudinal direction with the open end of one module facing the bowl end of another module, each of the modules having a space for accommodating fuel and the spaces being in communication with each other by means of holes in the bowl ends.

### Background of the invention

In order to stay competitive, there is an ongoing chase for weight as well as cost savings in the automotive business. With vehicle manufactures merging, and with increasing numbers of vehicle models to support, there is a constant strive for synergy effects. Consequently, vehicle parts such as fuel tanks should preferably be possible to utilize across several vehicle platforms, in order to be more cost effective.

Fuel tanks are no exception. Cheaper, lighter plastic tanks instead of traditional metal tanks can be found on vehicles on the streets today.

Tanks for heavy vehicles, with a fuel volume of perhaps 300-800 litres or more, are however subjected to vibrations and strong forces as the fuel moves back and forth in the tank. For tanks made of plastic, the stress risks exhausting the material and to avoid this, baffle plates can be added to the tanks.

The use of baffle plates is commonly known, and usually these partition walls are inserted at regular intervals along the interior of the tank and provided with openings through which the fuel can flow only in limited volume. In addition to decreasing the impact of the fuel waves, the baffle plates also serve to reinforce the tank, and reducing deformation of the tank as it is fixed to the vehicle mounted tank bracket. Plastic tanks of sizes appropriate for heavy vehicles are however commonly manufactured through rotation- or blow-molding, and with the use of these production technologies is the material thickness difficult to control, while applying baffle plates is expensive and complicated, if even feasible.

Generic German patent application DE 102005 050 803 describes a fuel tank with an integral hollow body consisting of several identical pot-shaped elements, each with a transverse bottom surface. The bottom surfaces form transverse baffle walls inside the tank between adjacent elements, and contain apertures for the fuel to flow through. The length of the modular tank according to DE 10 2005 050 803 may thus vary with the number of combined elements.

However, the space available for the tank and its connections often varies from one vehicle model to another. The volume as well as the shape of the space available can vary from a chassis to another. As a result, a tank used for one vehicle model might not physically fit in the chassis of another. Although the tank described in DE 10 2005 050 803, with its identical pot- shaped elements, may vary in a longitudinal direction, it is thus likely that such a tank can not be utilized across a variety of chassis. Consequently, there remains a need for fuel tanks fulfilling harsh automotive requirements, which are easy and cost effective to produce and can be utilized across a wide variety of heavy vehicle chassis.

WO 00/05090 teaches a vehicle tank with a varying cross section along a longitudinal direction for adapting to a space available when mounting said tank on a vehicle frame. The tank comprises a plurality of bowl-shaped modules, having an open end and a bowl end forming the tank by connecting the bowl end of one module to an open end of an adjacent module. Holes in the bowl ends allow flowing of liquid between said modules. The cross section of an open end of one module matches the cross section of a bowl end of an adjacent module, whereby the cross sections vary depending on the outer geometry of the module and the tank.

EP 1 061 306 A1 teaches a similar tank for a vehicle as the aforementioned WO 00/05090 comprising of a plurality of rotational symmetric modules being resistant against pressure. The outline of a cross section of each module has a two C form, whereby length, widths and axis alignment of each module varies for adapting the tank's overall dimension to a space available in the vehicle.

DE 44 42 780 A1 and also WO 2007/0699867 A teach a vehicle tank comprising a plurality of bowl-shaped modules, having an open end and a bowl end forming the tank by connecting the bowl end of one module to an open end of an adjacent module. Holes in the bowl ends allow flowing of liquid between said modules. All modules have a constant cross section along a longitudinal direction.

From DE 103 23 072 A1 one may learn about a vehicle tank comprising a gradually formed end portion with two tapered diminutions configured such that an additional tank can be attached to the tank at either one of the diminutions by a fluid tight fastening.

### Summary of the invention

It is therefore an object of the present invention to provide a fuel tank of the type mentioned by way of introduction, and a method for manufacturing the same, in which the above related drawbacks are eliminated wholly or at least partly.

According to a first aspect of the invention, this and other objects are achieved by a heavy vehicle modular fuel tank, comprising a plurality of bowl shaped modules having an open end and a bowl end, which modules are connected to one another in a row in a longitudinal direction with the open end of one module facing the bowl end of another module, each of the modules having a space for accommodating fuel and the spaces being in communication with each other by means of holes in the bowl ends, wherein the tank has a varying outer cross section along the longitudinal direction so as to be adapted to a space available when mounting the tank on a heavy vehicle frame. By the provision of a tank made by modules and a tank which has a varying cross section it is possible to adapt the tank to a specific heavy vehicle chassis. This implies that the tank can provided with a shape which fits to the current frame and/or components arranged on the frame, and at the same time the space available can be used in an effective way.

According to a second aspect of the invention, this and other objects are achieved by a method of manufacturing heavy vehicle modular fuel tank comprising the steps of forming a plurality of bowl shaped modules having an open end and a bowl end, the bowl ends having holes, and connecting the modules to one another in a row in a longitudinal direction, with the open end of one module facing the bowl end of another module, each of the modules having a space for accommodating fuel and the spaces being in communication with each other by means of the holes in the bowl ends. The step of forming a plurality of bowl shaped modules comprises forming the modules such that an outer cross section of the tank varies along the longitudinal direction, so as to adapt the tank to a space available when mounting the tank on a heavy vehicle frame.

According to the present invention, the cross section of the tank can thus be varied in the longitudinal direction, thus enabling further flexibility of the shape of the tank. The cross section of a module might, for instance, be tapered for part of the module in order to allow the tank to fit alongside various equipments, such as for examples cables or other components mounted on the frame.

The varying cross section according to the present invention is intended to provide a tank with a flexible shape. This should not be confused with minor variations, such as flanges or beads, provided in connection to the junction between two sections.

The variation in cross section may be achieved in different ways.

According to the invention, the cross section variation results in a varying cross section area. In this case, a minimum cross section area of the tank is typically at least ten percent smaller than a maximum cross section area. If required, the difference in cross section area between the minimum and maximum cross sections can be greater, e.g. 30 percent or more.

According to the invention, at least one of said modules has a varying cross section along the longitudinal direction. By allowing the geometry of each module to vary, an even greater freedom is achieved for designing a tank adapted for a specific geometry.

In order to maximize the ability to combine modules, the open end and bowl end of each module have matching cross sections, thereby enabling an open end of any module to fit with a bowl end of any other module. Accordingly, the ability to combine differently shaped modules increases, and along with it is a more flexibly modular tank provided.

Preferably, a tank module "family" is provided, such that a set of "standard" modules is available in the family, from which to choose when designing a tank for a specific chassis. Having a variety of differing standard modules which can be combined to fit different chassis is naturally cost effective, and thus, modular fuel tanks in accordance with the present invention can be utilized across a wide variety of heavy vehicle platforms in a cost effective manner.

Although not limited thereto, the cross section of the tank in the longitudinal direction is preferably essentially one of circular, D-shape or rectangular. Forming the tank to have either of these preferred shapes enables tools used for known tanks to be re-used.

The fuel tank according to the present invention may additionally comprise a bowl shaped end module, connected with its open end facing the open end of a preceding module. The end module is thus arranged to form a closed end to the plurality of modules forming the modular tank.

In the case of tank modules formed in plastic, some type of molding is preferably used to provide forms with a varying cross section. Although modular plastic tanks for heavy vehicle tanks are known in the art, such modules are normally manufactured through rotation- or blow-molding. With the use of these production technologies the material thickness is difficult to control, and complex shapes, such as a shape having a varying cross section, are not feasible. On the contrary, injection molding uses both inner and outer tool parts, and the flexibility of the shape of the modules increases. A module adapted for a specific area can thus easily be manufactured. Manufacturing through injection molding furthermore improves control of the material thickness throughout the module in comparison to rotation- or blow- molding, commonly used for manufacturing of large plastic tanks, and also gives the possibility to add a stiffening structure to the inside of the bowl end (further discussed below).

For example, a specific module can easily be formed with a cross section that fits a restricted chassis area (e.g. making room for the frame or other vehicle mounted components or their brackets arranged next to the module), while other modules, preferably from a tank module family, are utilized to form the remaining modular tank.

The modules may be connected to one another by means of at least one of soldering, snap fitting, welding, screwing or gluing. In the case of snap fitting the modules together, tools already available on the market for insertion of baffle plates can be re-used. To facilitate the snapping process, the modules may be pre-warmed and for improved attachment, the use of O-rings may be advantageous. If found necessary, an additional welding operation can be carried out, and additionally or alternatively the overlapping section may be provided with mounting straps in order to apply an outer pressure from outside the tank to even further contribute to keeping the modules fixed to one another should the tank be exposed to intense vibrations. Furthermore, a strap can be wound around the tank in its longitudinal direction to yet further contribute to keep all modules tightly fit together.

To be able to, for instance, fill the tank with fuel, measure the fuel level or drain the tank from fuel, the method may further comprise forming additional functional components or connections therefore. Consequently, at least one of the modules may be formed to comprise for instance a filler neck, a drain plug, a fuel sender and/or a check valve. Alternatively or additionally may connections be formed for adding the above mentioned components after the forming process of the module.

Furthermore, if found necessary, at least one of the modules may comprise additional stiffening structures for reinforcement of the tank. The additional structures, provided either as part of the forming process or afterwards, may be of plastic material or likewise be metallic and they serve to further reinforce the modular plastic fuel tank in accordance with the present invention. They can preferably be formed as ribs.

Other aspects, benefits and advantageous features of the invention will be apparent from the following description and claims.

### Brief description of the drawings

The invention will be more apparent from the accompanying drawings, which are provided by way of non-limiting examples.
Figure 1 shows a heavy vehicle onto which a modular plastic fuel tank according to the embodiment of the present invention is mounted.
Figure 2 is an exploded view of the modular plastic fuel tank shown in Figure 1.
Figure 3 is a flow chart of the steps for manufacturing the modular plastic fuel tank shown in Figure 2.
Figures 4A to 4E show a variety of options for connecting two modules to one another.

### Detailed description of the preferred embodiments

In the following detailed description, preferred embodiments of the present invention will be described. However, it is to be understood that features of the different embodiments are exchangeable between the embodiments and may be combined in different ways, unless something else is specifically indicated. It may also be noted that, for the sake of clarity, the dimensions of certain components illustrated in the drawings may differ from the corresponding dimensions in real-life implementations of the invention.

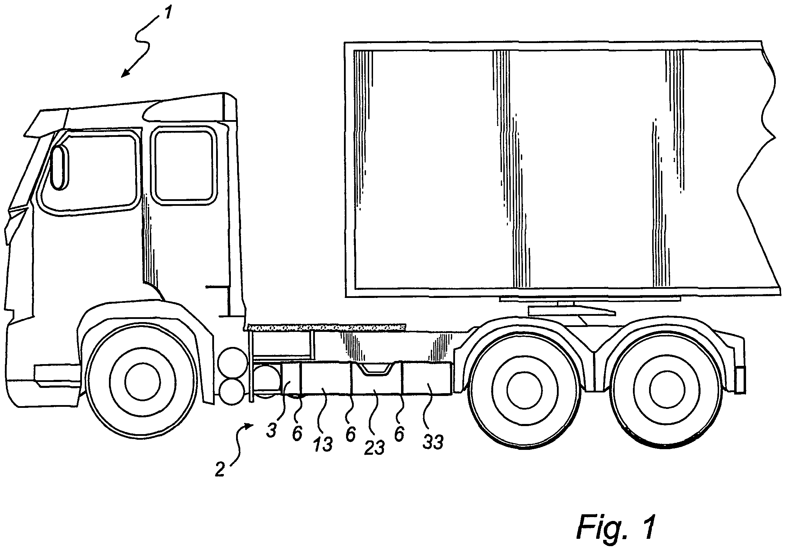

Figure 1 shows a heavy vehicle 1 having a chassis onto which a modular plastic fuel tank 2 according to a first embodiment of the present invention is mounted. The position of the tank 2 in relation to the chassis and the manner in which it is mounted thereto is merely exemplary. The expression "chassis" here refers to the vehicle frame and any components mounted on the frame. Typically, the chassis comprises at least the frame, wheel and boogie suspension, wheels and tires.

The tank 2 comprises a first module 3 acting as a front module, a second and third module 13 and 23 respectively, acting as intermediate modules, and an end module 33 closing the tank 2. Although the number of intermediate modules 13, 23 in this example is two, the invention is not restricted thereto. The number of intermediate modules 13, 23 combined is suitably determined in consideration to the chassis in which the tank 2 is planned to fit.

The modules 3, 13, 23, 33 overlap one another, such that overlapping sections 6 are formed between two consecutive modules 3, 13, 23, 33. Note however, that although the modules 3, 13, 23, 33 in the example form overlapping sections 6 when connected to one another, modules 3, 13, 23, 33 may likewise be connected without overlapping.

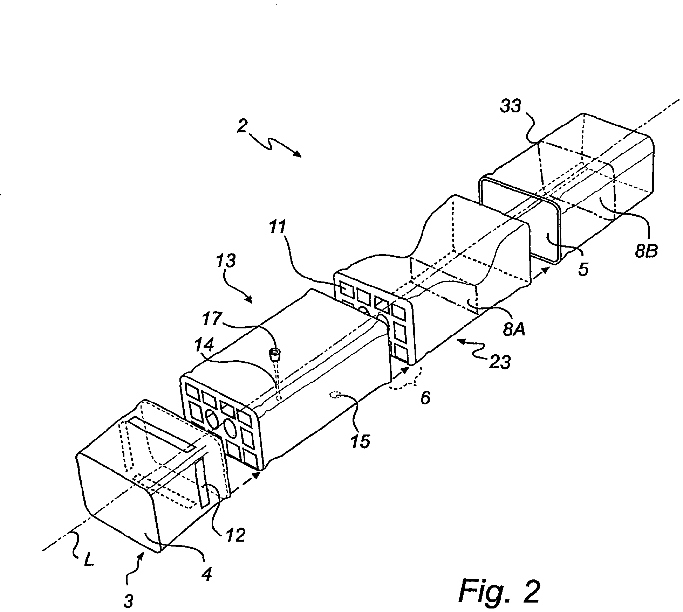

Figure 2 illustrates, in an exploded view, the modular plastic fuel tank 2 of Figure 1. Each of the bowl shaped modules 3, 13, 23, 33 respectively has a bowl end 4, an open end 5, and a space for accommodating fuel. The first three modules 3, 13, 23 are arranged to overlap one another in a longitudinal direction L, with the open end 5 of one module overlapping the bowl end 4 of another. The module closing the tank 2, i.e. the bowl shaped end module 33, is arranged with its open end 5 overlapping the open end 5 of the preceding module 23, i.e. the last intermediate module 23.

When assembled, the bowl ends 4 of the modules 3, 13, 23 contribute to the robustness of the tank 2, i.e. serve to reinforce the tank 2, to better meet the harsh automotive requirements of a heavy vehicle 1, such as vibrations, and reducing deformation of the tank 2 as it is fixed to the vehicle by means of for instance tank brackets and mounting straps.

Preferably, although not restricted thereto, the open end 5 and bowl end 4 of the front module 3 and intermediate modules 13, 23 have matching cross sections, as shown in Figure 2, thereby enabling for the open end 5 of any of the modules 3, 13, 23 to fit with the bowl end 4 of any other module 3, 13, 23. A module 3, 13, 23 can thus regardless of its shape between its two overlapping sections 6 overlap any other module 3, 13, 23 having a different shape between its two overlapping sections 6. Additionally, the end module 33 preferably has its open end 5 matching the cross sections of the first three modules 3, 13, 23, such that the open end 5 of the end module 33 can fit with the open end 5 of any preceding module 3, 13, 23.

The bowl ends 4 of the intermediate modules 13, 23 form baffle walls, improving the structural strength of the tank. At the same time, the bowl ends are each provided with openings, thus enabling adjacent modules 13, 23 to be in communication with each other. The openings in the walls are formed to allow fuel to flow between the modules in limited volume, thus decreasing the impact of the fuel waves. Such wave-attenuating walls, also referred to as "plash walls", contribute to avoiding exhaustion of the plastic material.

The length of the modules 3, 13, 23, 33 may vary, and so may their shapes compared to one another. For instance one module 3, 13, 23, 33 may be circular in its longitudinal direction L while another may be D-shaped, should this combination be desirable. In the example of Figure 2, the modules 3, 13, 23, 33 have essentially rectangular cross sections, but the invention is not restricted thereto.

Further, a tank 2 in accordance with the invention has a varying cross section 8A, 8B along the longitudinal direction L so as to adapt the tank 2 to a heavy vehicle chassis. Consequently, the cross section 8A of one module may differ from a cross section 8B of another module. Preferably however, at least one of the modules 3, 13, 23, 33 has a varying cross section between its two overlapping sections 6 in the longitudinal direction L, and thus the third module, i.e. intermediate module 23, in Figure 2 has a varying cross section shape between its overlapping sections 6. The cross section shape of module 23 has been adapted to fit into the chassis shown in Figure 1, where lack of space forces modifications to the shape of the tank 2 to avoid interference with for instance other vehicle mounted components.

The minimum cross section 8A may typically be at least 10 percent smaller, and possibly more than 30 percent smaller than the maximum cross section 8B. Examples of component mounted to the frame requiring a reduction of the tank cross section include: spring anchorage (reduction about 5-10%), air tank bracket (25-35%), air tank (around 15%) and breather filter for fuel tank (5-10%).

Which modules 3, 13, 23, 33 need to have a modified cross section depends on the chassis onto which the modular tank 2 is to be mounted. For instance, in case of a module 3, 13, 23, 33 with rotational symmetry, the adjustment of the cross section may include a varying module cross section diameter between the two overlapping sections of the specific module 3, 13, 23,33.

In Figure 2, module 3 comprises additional stiffening structures 12, preferably ribs, for reinforcement of the tank 2. If found necessary, however, the stiffening structures 12 may be comprised in all or a selection of the modules 3, 13, 23, 33.

Furthermore, at least one of the modules 3, 13, 23, 33 preferably comprises additional functional components. Thus, for handling of fuel, the tank 2 of Figure 2 comprises a filler neck 17, a fuel sender 14 and a drain plug 15. These are provided for the second module, i.e. intermediate module 13. The filler neck 17 allows fuel to be filled into the tank 2, the drain plug 15 fuel to be drained from the tank 2, and the fuel sender 15 the fuel level to be measured. Additionally, the module 13 may comprise check valves for preventing fuel to flow in both directions, although not shown in this example. Which, if any, modules 3, 13, 23, 33 should comprise additional functional components 14, 15, 17 is for the designer of the tank 2 to judge.

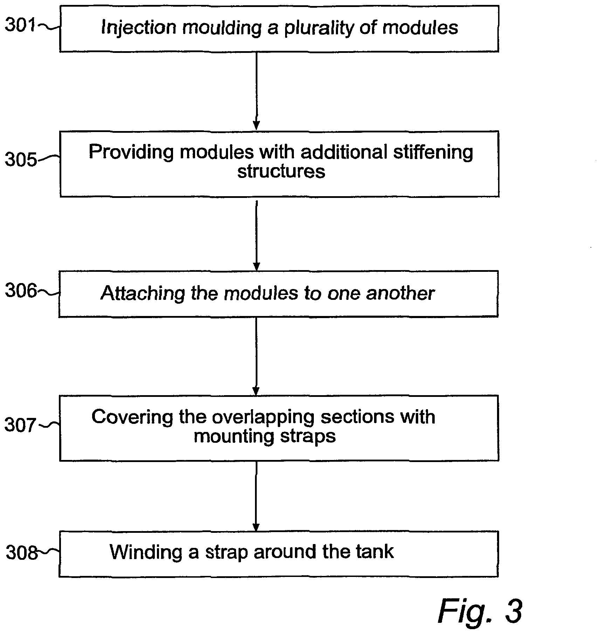

The modular plastic fuel tank 2 shown in Figure 2 will be discussed in further detail hereinafter, in conjunction with the manufacturing steps thereof described in the flow chart of Figure 3.

First, in step 301, a plurality of bowl shaped modules 3, 13, 23, 33 are injection molded. Although injection molding is preferred, the invention is not restricted thereto. Likewise, the modules 3, 13, 23, 33 may be formed using conventional techniques, such as for instance molding. By utilizing injection molding, the designer is able to form the modules more freely compared to what is possible with conventional techniques such as rotation- or blow-molding. For injection molding, a unique tool is designed for each unique module design. During production of the unique module 3, 13, 23 or 33, the corresponding tool is supplied with the plastic material of which the module is to be formed, and during heating of the plastic, the module is formed in accordance with the design of the tool.

The bowl ends 4 of the intermediate modules 13, 23 are, during the injection molding of step 301, formed with openings, i.e. holes, through which fuel can flow.

Furthermore, for the tank 2 shown in Figure 2, module 23 is formed with a varying cross section 8A in the longitudinal direction L of the module 23, between its overlapping sections 6.

At least one of the modules is preferably an end module 33. If suitable for the tank 2 in which the end module 33 is to be comprised, the cross section of the end module 33 may likewise vary in the longitudinal direction L.

Optionally, at least one of the modules 3, 13, 23, 33 is further, during the injection molding of step 301, formed to have additional functional components, such as the components 14, 15, 17 mentioned above, or connections for mounting such components.

For reinforcement of the tank 2, at least one of the modules 3, 13, 23, 33 may optionally, as shown in step 305, further be provided with additional stiffening structures 12 for reinforcement of the tank 2, preferably ribs. The stiffening structures 12, which preferably are of plastic material or metal, are in the example of Figure 2 added to the front module 3 during the injection molding process, but alternatively, the stiffening structures 12 may likewise be provided to the module 3 afterwards.

The front module 3 and the intermediate modules 13, 23 are, in step 306, connected to one another in the longitudinal direction L, with the open end 5 of one module 3, 13, 23 overlapping the bowl end 4 of another in the overlapping sections 6. Additionally, the end module 33 is arranged to with its open end 5 overlap the preceding module 23, attaching the two modules 23, 33 to one another.

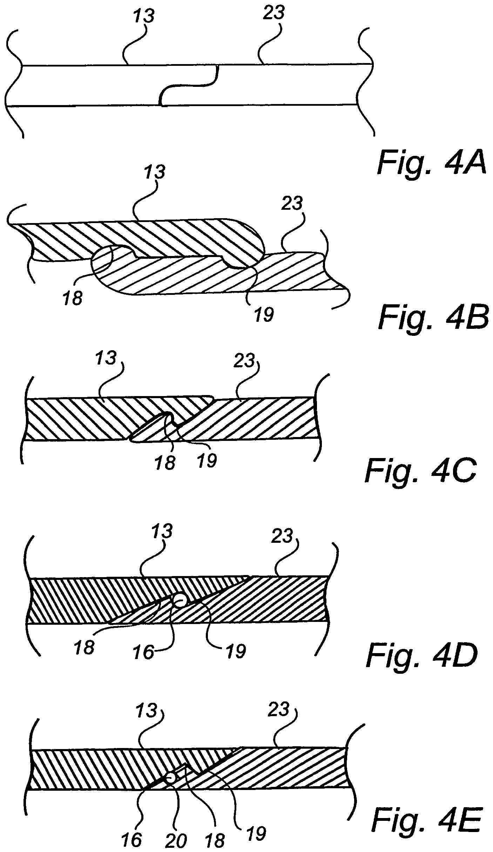

A variety of options for connecting modules 3, 13, 23, 33 to one another by means of at least one of soldering, snap fitting, welding, screwing or gluing is shown in Figures 4A to 4E.

Two modules, in the example the intermediate modules 13, 23, may for instance be sealed by the use of glue or soldering, as shown in Figure 4A.

Alternatively or additionally, the modules 13, 23 may be snap fitted to one another, as shown in Figures 4B to 4E.

The two modules 13, 23 shown in Figure 4B, for instance, each have a protrusion 18 and a recess 19. The recess 19 of one of the modules corresponds to the protrusion 18 of the other, and vice versa, thereby enabling snap fitting of the modules 13, 23 as they are assembled.

Figure 4C shows another example of two modules 13, 23 snap fitted to one another, the recess 19 of one of the modules corresponding to the protrusion 18 of the other, and vice versa. In this example, the thickness of the tank wall is constant in the overlapping section 6.

Further, the snap fitting of the modules 13, 23 shown in Figure 4D is realized with an additional sealing element 16, such as an O-ring, inserted between the protrusion 18 and recess 19 of the modules 13, 23. The sealing element 16 is preferably, but not necessarily, inserted in the overlapping sections 6, in order to contribute to an improved attachment between the two modules 13, 23.

In Figure 4E, another example of snap fitting comprising an O-ring 16 is shown. The sealing element 16 is here arranged in a second recess 20 of one of the modules 23.

To facilitate the snap fitting process, the modules 13, 23 may be preheated prior to being fitted to one another. If found necessary, the modules may, in addition to being snap fitted, additionally be welded to one another to further contribute to keeping the modules fixed to one another.

Returning to Figure 3, if preferred, the overlapping sections 6 are in step 307 further covered with mounting straps applying an outer pressure, to even more improve the attachments of the modules 3, 13, 23, 33 to one another. Alternatively, the tank brackets and the mounting straps (not shown) for attaching the tank to the vehicle can be used for applying the outer pressure on the overlapping sections 6.

As an option and as shown in step 308, a strap may additionally be wound around the modular tank 2 in the longitudinal direction L, in yet another effort to ensure that the modules 3, 13, 23, 33 are attached to one another.

## Claims

1. A heavy vehicle modular fuel tank (2), comprising a plurality of bowl shaped modules (3,13, 23) having an open end (5) and a bowl end (4), said modules (3,13, 23) being connected to one another in a row in a longitudinal direction (L) with the open end of one module (3,13, 23) facing the bowl end of another module (3,13, 23), each of the modules (3, 13, 23) having a space for accommodating fuel and said spaces being in communication with each other by means of holes in said bowl ends (4), wherein said modular fuel tank (2) has a varying outer cross section along said longitudinal direction (L) so as to be adapted to a space available when mounting said tank on a heavy vehicle frame
**characterized in that,**
said open end (5) and bowl end (4) of each module (3, 13, 23) have matching cross sections, thereby enabling an open end (5) of any module (3, 13, 23) to fit with a bowl end (4) of any other module (3, 13, 23) and at least one of said modules (3, 13, 23) has a minimum cross section (8A) being at least ten percent smaller than a maximum cross section (8B) of another module (3, 13, 23, 33) between said matching cross sections and
along said longitudinal direction (L), the cross section shape (8A) being adapted to fit the cross section shape of said module (23) into the chassis of a vehicle (1).

2. A modular fuel tank according to claim 1, wherein said tank is rotationally symmetric, and has a varying cross section diameter along said longitudinal direction.

3. A modular fuel tank according to any one of the preceding claims, further comprising a bowl shaped end module (33) connected to a preceding module with the open end of said end module facing the open end of said preceding module.

4. A modular fuel tank according to any one of the preceding claims, wherein each module is formed in a plastic material.

5. A modular fuel tank according to any one of the preceding claims, wherein said modules are attached to one another by means of at least one of soldering, snap fitting, welding, screwing or gluing.

6. A modular fuel tank according to any one of the preceding claims, wherein at least one of said modules further comprises additional stiffening structures (12) for reinforcement of the tank.

7. A method of manufacturing a heavy vehicle modular fuel tank (2) according to one of the aforementioned claims comprising the steps of:
forming a plurality of bowl shaped modules (3,13, 23) having an open end (5) and a bowl end (4), said bowl ends (4) having holes, and
connecting (306) said modules (3, 13, 23) to one another in a row in a longitudinal direction (L), with the open end (5) of one module (3,13, 23) facing the bowl end (4) of another module (3,13, 23), each of the modules (3,13, 23) having a space for accommodating fuel and said spaces being in communication with each other by means of said holes in said bowl ends (4),
whereby the step of forming a plurality of bowl shaped modules (3,13, 23) comprises forming said modules (3, 13, 23) such that a cross section of said tank varies along said longitudinal direction (L), so as to adapt said tank (2) to a space available when mounting said tank on a heavy vehicle frame,
**characterized in that**
a further step of : forming at least one of said modules (3, 13, 23) is comprised such that an open end (5) and bowl end (4) of each module (3, 13, 23) have matching cross sections, thereby enabling an open end (5) of any module (3, 13, 23) to fit with a bowl end (4) of any other module (3, 13, 23) and a minimum cross section area (8A) of at least one of said modules (3, 13, 23) is at least ten percent smaller than a maximum cross section area (8B) of another module (3, 13, 23) between said matching cross sections and along said longitudinal direction (L) for fitting the cross section shape of said module (23) into the chassis of a vehicle (1).

8. A method according to claim 7, wherein the step of forming a plurality of bowl shaped modules comprises molding (301) said modules.

9. A method according to either of claim 8, wherein the step of forming a plurality of bowl shaped modules comprises injection molding (301) said modules.

10. A method according to any one of claims 7 to 9, further comprising the step of: connecting a bowl shaped end module to a preceding module, with the open end of the end module facing the open end of said preceding module.

11. A method according to any one of claims 7 to 10, wherein for a tank with rotational symmetry, said tank has a varying cross section diameter along said longitudinal direction.

12. A method according to any one of claims 7 to 11, wherein the step of connecting said modules includes attaching said modules to one another by means of at least one of soldering, snap fitting, welding, screwing or gluing.

13. A method according to any one of claims 7 to 12, further comprising the step of:
forming additional functional components (14, 15, 17) or connections therefore.

14. A method according to any one of claims 7 to 13, further comprising the step of:
adding (305) stiffening structures for reinforcement of the tank.

## Patentansprüche

1. Modularer Kraftstofftank (2) für ein Schwerfahrzeug mit einer Vielzahl von schüsselförmigen Modulen (3, 13, 23), die ein offenes Ende (5) und ein Schüsselende (4) aufweisen, wobei die Module (3, 13, 23) in Längsrichtung (L) in einer Reihe miteinander verbunden sind, wobei das offene Ende eines Moduls (3, 13, 23) dem Schüsselende eines weiteren Moduls (3, 13, 23) zugewandt ist, wobei jedes der Module (3, 13, 23) einen Raum zur Aufnahme von Kraftstoff aufweist und die Räume mittels Löchern in den Schüsselenden (4) miteinander in Verbindung stehen, wobei der modulare Kraftstofftank (2) entlang der Längsrichtung (L) einen variierenden Außenquerschnitt aufweist, so dass der Tank bei Anbringung an einem Schwerfahrzeugrahmen an einen verfügbaren Raum angepasst ist,
**dadurch gekennzeichnet, dass**
das offene Ende (5) und das Schüsselende (4) jedes Moduls (3, 13, 23) zusammenpassende Querschnitte aufweisen, wodurch ermöglicht wird, dass ein offenes Ende (5) irgendeines Moduls (3, 13, 23) zu einem Schüsselende (4) irgendeines anderen Moduls (3, 13, 23) passt, und dass wenigstens eines der Module (3, 13, 23) einen minimalen Querschnitt (8A) aufweist, der um wenigstens zehn Prozent kleiner als ein maximaler Querschnitt (8B) eines anderen Moduls (3, 13, 23, 33) zwischen zusammenpassenden Querschnitten und entlang der Längsrichtung (L) ist, wobei die Querschnittsform (8A) so ausgelegt ist, dass sie die Querschnittsform des Moduls (23) in das Fahrgestell eines Fahrzeugs (1) hineinpasst.

2. Modularer Kraftstofftank nach Anspruch 1, wobei der Tank rotationssymmetrisch ist und einen variierenden Querschnittsdurchmesser entlang der Längsrichtung aufweist.

3. Modularer Kraftstofftank nach irgendeinem der vorhergehenden Ansprüche, der weiterhin ein schüsselförmiges Endmodul (33) umfasst, das mit einem vorhergehenden Modul verbunden ist, wobei das offene Ende des Endmoduls dem offenen Ende des vorhergehenden Moduls zugewandt ist.

4. Modularer Kraftstofftank nach irgendeinem der vorhergehenden Ansprüche, wobei jedes Modul aus Kunststoffmaterial gebildet ist.

5. Modularer Kraftstofftank nach irgendeinem der vorhergehenden Ansprüche, wobei die Module mittels wenigstens einem aus Löten, einer Schnappverbindung, Schweißen, Schrauben oder Kleben aneinander befestigt sind.

6. Modularer Kraftstofftank nach irgendeinem der vorhergehenden Ansprüche, wobei zumindest eines der Module weiterhin zusätzliche Versteifungsstrukturen (12) zur Verstärkung des Tanks umfasst.

7. Verfahren zur Herstellung eines modularen Kraftstofftanks (2) für ein Schwerfahrzeug nach einem der vorhergehenden Ansprüche, das die Schritte umfasst:
- Ausbilden einer Vielzahl von schüsselförmigen Modulen (3, 13, 23) mit einem offenen Ende (5) und einem Schüsselende (4), wobei die Schüsselenden (4) Löcher aufweisen, und
- Verbinden (306) der Module (3, 13, 23) miteinander in einer Reihe in Längsrichtung (L), wobei das offene Ende (5) eines Moduls (3, 13, 23) dem Schüsselende (4) eines weiteren Moduls (3, 13, 23) zugewandt ist, wobei jedes der Module (3, 13, 23) einen Raum zur Aufnahme von Kraftstoff aufweist und die Räume mittels Löchern in den Schüsselenden (4) miteinander in Verbindung stehen,
- wobei der Schritt des Ausbildens einer Vielzahl von schüsselförmigen Modulen (3, 13, 23) umfasst, dass die Module (3, 13, 23) derart ausgebildet werden, dass der Querschnitt des Tanks entlang der Längsrichtung (L) variiert, um den Tank (2) bei Anbringung an einem Schwerfahrzeugrahmen an einen verfügbaren Raum anzupassen,
**dadurch gekennzeichnet, dass**
- ein weiterer Schritt des Ausbildens wenigstens eines der Module (3, 13, 23) umfasst, dass ein offenes Ende (5) und ein Schüsselende (4) jedes Moduls (3, 13, 23) zusammenpassende Querschnitte aufweisen, wodurch ermöglicht wird, dass ein offenes Ende (5) irgendeines Moduls (3, 13, 23) zu einem Schüsselende (4) irgendeines anderen Moduls (3, 13, 23) passt, und dass eine minimale Querschnittsfläche (8A) wenigstens eines der Module (3, 13, 23) um wenigstens zehn Prozent kleiner als eine maximale Querschnittsfläche (8B) eines anderen Moduls (3, 13, 23, 33) zwischen zusammenpassenden Querschnitten und entlang der Längsrichtung (L) ist, um die Querschnittsform des Moduls (23) in das Fahrgestell eines Fahrzeugs (1) einzupassen.

8. Verfahren nach Anspruch 7, wobei der Schritt des Ausbildens einer Vielzahl von schüsselförmigen Modulen das Formen (301) der Module umfasst.

9. Verfahren nach Anspruch 8, wobei der Schritt des Ausbildens einer Vielzahl von schüsselförmigen Modulen das Spritzgießen (301) der Module umfasst.

10. Verfahren nach irgendeinem der Ansprüche 7 bis 9, das weiterhin den Schritt des Verbindens eines schüsselförmigen Endmoduls mit einem vorhergehenden Modul umfasst, wobei das offene Ende des Endmoduls dem offenen Ende des vorhergehenden Moduls zugewandt ist.

11. Verfahren nach irgendeinem der Ansprüche 7 bis 10, wobei für einen Tank mit Rotationssymmetrie der Tank einen variierenden Querschnittsdurchmesser entlang der Längsrichtung aufweist.

12. Verfahren nach irgendeinem der Ansprüche 7 bis 11, wobei der Schritt des Verbindens der Module das Befestigen der Module aneinander mittels wenigstens einem aus Löten, einer Schnappverbindung, Schweißen, Schrauben oder Kleben aufweist.

13. Verfahren nach irgendeinem der Ansprüche 7 bis 12, das weiterhin den Schritt aufweist, dass zusätzliche funktionelle Komponenten (14, 15, 17) oder Verbindungen für diese ausgebildet werden.

14. Verfahren nach irgendeinem der Ansprüche 7 bis 13, das weiterhin den Schritt des Hinzufügens (305) von Versteifungsstrukturen zur Verstärkung des Tanks umfasst.

## Revendications

1. Réservoir de carburant modulaire de véhicule lourd (2), comprenant plusieurs modules en forme de bol (3, 13, 23) ayant une extrémité ouverte (5) et une extrémité en bol (4), les modules (3, 13, 23)étant reliés les uns aux autres dans une rangée dans une direction longitudinale (L), l'extrémité ouverte d'un module (3, 13, 23) étant en vis-à-vis de l'extrémité en bol d'un autre module (3, 13, 23), chacun des modules (3, 13, 23) ayant un espace pour recevoir du carburant et les espaces sont en communication les uns avec les autres par l'intermédiaire de trous dans les extrémités en bol (4), le réservoir de carburant modulaire (2) ayant une section transversale extérieure variable le long de la direction longitudinale (L) de manière à être adapté à un espace disponible lors du montage du réservoir sur un châssis de véhicule lourd,
**caractérisé en ce que**
l'extrémité ouverte (5) et l'extrémité en bol (4) de chaque module (3, 13, 23) a des sections transversales d'appariement, permettant à une extrémité ouverte (5) d'un module quelconque (3, 13, 23) de s'adapter à une extrémité en bol (4) de tout autre module (3, 13, 23) et au moins un des modules (3, 13, 23) a une section transversale minimum (8A), qui est au moins 10 % plus petite qu'une section transversale maximum (8B) d'un autre module (3, 13, 23), entre les sections transversales d'appariement et le long de la direction longitudinale (L), la forme en section transversale (8A) étant adaptée pour agencer la forme en section transversale du module (23) dans le châssis d'un véhicule (1).

2. Réservoir de carburant modulaire selon la revendication 1, **caractérisé en ce que** le réservoir est symétrique en rotation, et a un diamètre de section transversale variable le long de la direction longitudinale.

3. Réservoir de carburant modulaire selon l'une quelconque des revendications précédentes, **caractérisé en ce qu'**il comprend de plus un module d'extrémité en forme de bol (33) relié à un module précédent, l'extrémité ouverte du module d'extrémité étant en vis-à-vis de l'extrémité ouverte du module précédent.

4. Réservoir de carburant modulaire selon l'une quelconque des revendications précédentes, **caractérisé en ce que** chaque module est formé d'une matière plastique.

5. Réservoir de carburant modulaire selon l'une quelconque des revendications précédentes, **caractérisé en ce que** les modules sont fixés les uns aux autres par l'intermédiaire d'au moins un brasage, un agencement par encliquetage, un soudage, un vissage ou un collage.

6. Réservoir de carburant modulaire selon l'une quelconque des revendications précédentes, **caractérisé en ce qu'**au moins un des modules comprend de plus des structures de raidissement supplémentaires (12) pour le renforcement du réservoir.

7. Procédé de fabrication d'un réservoir de carburant modulaire (2) de véhicule lourd selon l'une quelconque des revendications précédentes, comprenant les étapes consistant à :
former plusieurs modules en forme de bol (3, 13, 23) ayant une extrémité ouverte (5) et une extrémité en bol (4), les extrémités en bol (4) ayant des trous, et
relier (306) les modules (3, 13, 23) les uns aux autres dans une rangée dans une direction longitudinale (L), l'extrémité ouverte (5) d'un module (3, 13, 23) étant en vis-à-vis de l'extrémité en bol (4) d'un autre module (3, 13, 23), chacun des modules ((3, 13, 23) ayant un espace pour recevoir du carburant et
les espaces sont en communication les uns avec les autres par l'intermédiaire des trous des extrémités en bol (4),
de sorte que l'étape de formation de plusieurs modules en forme de bol (3, 13, 23) comprend la formation des modules (3, 13, 23) de sorte qu'une section transversale du réservoir varie le long de la direction longitudinale (L), de manière à adapter le réservoir (2) à un espace disponible lors du montage du réservoir sur un châssis de véhicule lourd,
**caractérisé en ce qu'**il
comporte de plus les étapes consistant à :
former au moins un des modules (3, 13, 23) est réalisé de telle sorte qu'une extrémité ouverte (5) et une extrémité en bol (4) de chaque module (3, 13, 23) ont des sections transversales d'appariement, permettant ainsi à une extrémité ouverte (5) d'un module quelconque (3, 13, 23) de s'agencer avec une extrémité en bol (4) d'un autre module quelconque (3, 13, 23), et une surface de section transversale minimum (8A) d'au moins un des modules (3, 13, 23) est au moins 10 % plus petite qu'une surface de section transversale maximum (8B) d'un autre module (3, 13, 23) entre les sections transversales d'appariement et le long de la direction longitudinale (L) pour agencer la forme de la coupe transversale du module (23) dans le châssis d'un véhicule (1).

8. Procédé selon la revendication 7, **caractérisé en ce que** l'étape de formation de plusieurs modules en forme de bol comprend le moulage (301) des modules.

9. Procédé selon la revendication 8, **caractérisé en ce que** l'étape de formation de plusieurs modules en forme de bol comprend le moulage par injection (301) des modules.

10. Procédé selon l'une quelconque des revendications 7 à 9, comprenant de plus l'étape consistant à :
relier un module d'extrémité en forme de bol à un module précédent, l'extrémité ouverte du module d'extrémité étant en vis-à-vis de l'extrémité ouverte du module précédent.

11. Procédé selon l'une quelconque des revendications 7 à 10, **caractérisé en ce que** pour un réservoir ayant une symétrie en rotation, le réservoir a un diamètre de section transversale variable le long de la direction longitudinale.

12. Procédé selon l'une quelconque des revendications 7 à 11, **caractérisé en ce que** l'étape de liaison des modules consiste à fixer les modules les uns aux autres par l'intermédiaire d'au moins un parmi un brasage un agencement par encliquetage, un soudage, un vissage ou un collage.

13. Procédé selon l'une quelconque des revendications 7 à 12, **caractérisé en ce qu'**il comprend de plus l'étape consistant à :
former des composants fonctionnels supplémentaires (14, 15, 17) ou des raccordements pour ceux-ci.

14. Procédé selon l'une quelconque des revendications 7 à 13, **caractérisé en ce qu'**il comprend de plus l'étape consistant à :
ajouter (306) des structures de raidissement pour renforcer le réservoir
